# NEUE EUROPÄISCHE PATENTSCHRIFT

(11) **EP 1 875 792 B2**
(45) Veröffentlichungstag und Bekanntmachung des Hinweises auf die Entscheidung über den Einspruch: **29.12.2021**
(45) Hinweis auf die Patenterteilung: 03.02.2016
(21) Anmeldenummer: 07106652.6
(22) Anmeldetag: 20.04.2007
(51) Int. Cl.: A01B 79/00

(54) **Methode zur Datenkonfiguration und Bereitstellung für landwirtschaftliche Arbeitsmaschinen**
Method for data configuration and data retrieval for agricultural machines
Méthode destinée à la configuration et l'extraction de données pour des machines agricoles

(30) Priorität: 03.07.2006 DE 102006030970
(43) Veröffentlichungstag der Anmeldung: 09.01.2008
(73) Patentinhaber: CLAAS Selbstfahrende Erntemaschinen GmbH, 33428 Harsewinkel (DE)
(72) Erfinder: Wippersteg, Heinz-Hermann, 32257, Bünde (DE); Grothaus, Hans-Peter, 33619, Bielefeld (DE); Steckel, Thilo, 33330, Gütersloh (DE)
(74) Vertreter: CLAAS Gruppe

(56) Entgegenhaltungen:
- EP-A- 1 560 143
- EP-A- 1 633 105
- DE-A1- 10 055 287

## Beschreibung

Die Erfindung betrifft eine Methode zur Datenkonfiguration und Bereitstellung sowie eine Vorrichtung zur Umsetzung der Methode nach dem Oberbegriff der Ansprüche 1 und 15.

Eine Vielzahl von Betriebsdaten, wie etwa Prozess-, Verfahrens- und arbeitswirtschaftliche Daten werden heute insbesondere im Bereich des Einsatzes landwirtschaftlicher Arbeitsmaschinen manuell oder teilautomatisiert erfasst und bereitsgestellt. Dabei wird das Potential dieser Informationen nur unzureichend ausgeschöpft, da neben der elektronischen Bereitstellung von maschinenspezifischen Prozessdaten häufig Arbeitsanweisungen und Leistungsabrechnungsmodi losgelöst hiervon mündlich oder schriftlich vorgenommen werden oder die bekannten Systeme stets nur in einem prozesskettenspezifischen Kontext und nicht prozessübergreifend eingesetzt werden.

Unter anderem aus der DE 43 22 293 ist ein Verfahren zum elektronischen Managen von landwirtschaftlichen Arbeitsmaschinen bekannt geworden, bei dem eine zentrale Recheneinheit Arbeitsabläufe zwischen Arbeitsmaschinen koordiniert. Das offenbarte Verfahren zielt insbesondere darauf ab, dass dem Landwirt ein Hilfsmittel bereit gestellt wird, mit dem er seine Arbeitsmaschinenflotte effizient koordinieren und in Abhängigkeit von den ermittelten Erträgen auszubringende Hilfsstoffe gezielt verabreichen kann. Dies reduziert die Kosten für die einzusetzenden Hilfsstoffe, da nunmehr beispielsweise nur soviel Düngemittel in den Boden eingebracht werden muss, wie diesem zuvor durch die sensierte Erntegutmenge entzogen wurde. Damit diese Düngemittelausbringung geographisch sehr präzise erfolgen kann, werden die Ertragsdaten mittels Satellitennavigation erfasst und in einer Datenbank hinterlegt, die dann zur Ausbringung des Düngers abgerufen wird. Je nach Ausführungsform ist es möglich, dass diese georeferenzierten Daten vor dem Einsatz in einer Recheneinheit der jeweiligen Arbeitsmaschine hinterlegt oder während des Einsatzes online an die Recheneinheit der landwirtschaftlichen Arbeitsmaschine übermittelt werden.

In einer Ausführungsform des Verfahrens kann die als Mähdrescher ausgeführte landwirtschaftliche Erntemaschine auch ohne Einbeziehung eines Leitrechners unmittelbar Informationen an Sä- und Düngemaschinen übermittelt, die zeitgleich die von dem Mähdrescher bereits abgeerntete Fläche bearbeiten. Wegen der einseitigen Ausrichtung derartiger Managementsysteme auf die bedarfsgerechte Ausbringung von Hilfsstoffe in Abhängigkeit vom ermittelten Erntegutertrag sind diese Systeme ungeeignet einen Datentransfer zwischen beliebigen landwirtschaftlichen Arbeitsmaschinen und/oder stationären Einrichtungen im Sinne einer Prozesskettenoptimierung sowie die effiziente Einbindung von landwirtschaftlichen Arbeitsmaschinen in bestehende Prozessketten zu realisieren. Zudem sind die generierten Daten stets auf einen konkreten Anwendungsfall beschränkt und sind nur in diesem konkreten Anwendungsfall, nämlich während eines ganz konkreten Feldbearbeitungschrittes sinnvoll nutzbar.

Aus dem Stand der Technik ist ein weiteres Datenaustauschsystem bekannt geworden, bei dem ereignisgesteuert mittels eines Leitrechners zwischen beliebigen landwirtschaftlichen Arbeitsmaschinen ein Kommunikationssystem, in der Regel zeitlich begrenzt, aufgebaut wird. Derartige Kommunikationssyteme haben den Vorteil, dass prozesskettenabhängig landwirtschaftliche Arbeitsmaschinen in das Kommunikationssystem eingebunden und aus diesem entlassen werden können. Während der Zeit der Einbindung in das Kommunikationssystem kann jede der landwirtschaftlichen Arbeitsmaschinen auf die in dem Kommunikationssystem verfügbaren Daten zugreifen und diese nutzen, sodass eine effiziente Optimierung der Arbeitsabläufe innerhalb einer Prozesskette erreichbar ist. Ein Nachteil eines derartig strukturierten Kommunikationssystems ist insbesondere der, dass die Datengenerierung und bereitstellung an eine konkrete Prozesskette und die in sie eingebundenen landwirtschaftlichen Arbeitsmaschinen geknüpft ist. Vor- und nachgelagerte Prozesse wie Auftragserteilung und Auftragsabrechnung, auftragsbezogene Einbindung in weitere Prozessketten und maschinenspezifische, nicht an eine Prozesskette gebundene Informationen, wie etwa Wartungsinformationen werden mittels des beschriebenen Kommunikationssystems nicht erfasst.

Aus der DE 100 55 287 ist eine Methode gemäß dem Oberbegriff des Anspruchs 1 bekannt.

Es ist deshalb Aufgabe der Erfindung ein Kommunikationssystem für landwirtschaftliche Arbeitsmaschine vorzuschlagen, welches die beschriebenen Nachteile des Standes der Technik vermeidet und insbesondere eine maschinenbezogene umfassende Datenbereitstellung ermöglicht.

Diese Aufgabe wird erfindungsgemäß durch die kennzeichnenden Merkmale der Ansprüche 1 und 11 gelöst.

Indem die Methode zur Datenkonfiguration und -bereitstellung für landwirtschaftliche Arbeitsmaschine im wesentlichen in der Wweise strukturiert ist, dass der landwirtschaftlichen Arbeitsmaschine in einem übergeordneten Datenkonfigurator ein auf die jeweilige landwirtschaftliche Arbeitsmaschine bezogener individualisierter Datensatz zugeordnet wird, ist sichergestellt, dass eine effiziente maschinespezifische Datenbereitstellung ermöglicht wird. Dies hat insbesondere den Vorteil, dass nunmehr die einer landwirtschaftlichen Arbeitsmaschine zugeordneten Informationen außerhalb eines konkreten Einsatzfalles prozessübergreifend verfügbar sind und zur kundenorientierten Bereitstellung von Dienstleistungskonzepten genutzt werden können.

Gemäß der Erfindung wird der übergeordnete Datenkonfigurator von einem Internet und der Datensatz als Internetseite in dem Internet gebildet. Dies hat den Vorteil, dass die Informationen weltweit generierbar sind und von dem Objekt abgerufen werden können.

Indem die Internetseite der landwirtschaftlichen Arbeitsmaschine zum Zeitpunkt der Auslieferung von einem Hersteller an einen Abnehmer der landwirtschaftlichen Arbeitsmaschine individualisiert zugeordnet wird steht der Informationspool unmittelbar von Beginn des Lebenszykluses der landwirtschaftlichen Arbeitsmaschine an zur Verfügung.

Indem der Datensatz in dem übergeordneten Datenkonfigurator von externen Anbieter generiert wird, wird sichergestellt, dass die der Internetseite zugeordneten Informationen einen hohen Informationsgehalt haben, da die externen Anbieter insbesondere spezielles Expertenwissen bereitstellen können, welches unter herkömmlichen Bedingungen nur schwer beschaffbar wäre.

Eine vorteilhafte Weiterbildung der Erfindung ergibt sich dann, wenn die landwirtschaftliche Arbeitsmaschine über Mittel zur selbstständigen Konfiguration der Datensätze verfügt und die Mittel als computerbasiertes Datenverarbeitungssystem ausgebildet sind, wobei das computerbasierte Datenverarbeitungssystem zumindest eine Steuer- und Auswerteinheit und eine objektbezogene ID-Adresse umfasst. Auf diese Weise lässt sich jede landwirtschaftliche Arbeitsmaschine unkompliziert in ein weltumgreifendes Datenaustauschsystem, das Internet integrieren, sodass jede landwirtschaftliche Arbeitsmaschine an einem beliebigen Punkt in der Welt ansprechbar wird.

Indem der oder die Datensätze von der landwirtschaftlichen Arbeitsmaschine und/oder dem externen Anbieter editierbar sind, wird erreicht, dass die Datensätze die landwirtschaftliche Arbeitsmaschine in die Lage versetzen sich in ein Arbeitsumfeld einzuordnen und/oder eine Selbstorganisation der landwirtschaftlichen Arbeitsmaschine möglich machen.

Eine einfach und strukturiert handhabbare Methode der Einordnung in ein Arbeitsumfeld und/oder die Selbstorganisation der landwirtschaftlichen Arbeitsmaschine wird dann erreicht, wenn eine Verknüpfung von Programmmodulen zu den Datensätzen vorgesehen ist. In einer vorteilhaften Ausgestaltung der Erfindung können die Programmmodule zumindest in der der landwirtschaftlichen Arbeitsmaschine zugeordneten Steuer- und Auswerteinheit, dem Datenkonfigurator oder einer von dem Datenkonfigurator ansprechbaren Datenspeicher- und Editiereinheit hinterlegt sein und/oder in diesen generiert werden. Eine hoher Flexibilität des Datenhandlings ergibt sich dann, wenn die Programmmodule in einer Kombination aus Steuer- und Auswerteinheit, dem Datenkonfigurator oder einer von dem Datenkonfigurator ansprechbaren Datenspeicher- und Editiereinheit hinterlegt sind und/oder in diesen generiert werden.

In vorteilhafter Weiterbildung der Erfindung umfassen die Datensätze Herstellerinformationen, Maschineninformationen, Betreiberinformationen, landwirtschaftliche Informationen, Vernetzungsinformationen und Instandhaltungsinformationen oder eine Kombination aus diesen, sodass die Datensätze einen hohen Informationsgehalt aufweisen.

Erfindungsgemäß bilden die Datensätze Prozessketten ab und die jeweilige landwirtschaftliche Arbeitsmaschine Bestandteil einer oder mehrerer Prozessketten ist. Dies hat insbesondere den Vorteil, dass die jeweilige landwirtschaftliche Arbeitsmaschine problemlos in beliebige Prozessketten integrierbar ist.

Ein strukturierter Aufbau der Datensätze und ein sicherer Austausch von Informationen ergibt sich in vorteilhafter Weiterbildung der Erfindung dann, wenn die Modulation der Programmmodulen in einer universellen Modulationssprache erfolgt und die Datensätze editierbar und stufenweise durch Integration weiterer Programmmodule verfeinerbar sind.

Indem die Vorrichtung zur Umsetzung der Methode zur Datenkonfiguration und - bereitstellung so ausgeführt ist, dass die landwirtschaftliche Arbeitsmaschine zumindest eine Steuer- und Auswerteinheit umfasst und der landwirtschaftlichen Arbeitsmaschine mittels der Steuer- und Auswerteinheit eine objektbezogene ID-Adresse zuordenbar ist und die Steuer- und Auswerteinheit einen Datenaustausch mit einem übergeordneten Datenkonfigurator ermöglicht und der Datenkonfigurator der landwirtschaftlichen Arbeitsmaschine einen individualisierten und editierbaren Datensatz über die Steuer und Auswerteinheit zuordnet, wird auf konstruktiv einfache Weise die Möglichkeit geschaffen, eine maschinenbezogene umfassende Datenbereitstellung zu ermöglichen.

In einer vorteilhaften Ausgestaltung der Erfindung wird die Freischaltung der ID-Adresse von dem Hersteller der landwirtschaftlichen Arbeitsmaschine bei Übergabe der landwirtschaftlichen Arbeitsmaschine an einen Abnehmer vorgenommen, sodass mit dem in Verkehr bringen der landwirtschaftlichen Arbeitsmaschine diesem ein individualisierte Informationsspeicher zugeordnet ist.

Weitere vorteilhafte Ausgestaltungen sind Gegenstand weiterer Unteransprüche und werden nachfolgend an Hand in mehreren Figuren dargestellter Ausführungsbeispiele beschrieben. Es zeigen:
- Figur 1: eine schematische Flussbilddarstellung der erfindungsgemäßen Methode
- Figur 2: eine Detail der erfindungsgemäßen Methode in Flussbilddarstellung
- Figur 3: die schematische Darstellung eines landwirtschaftlichen Anwendungsfalles der erfindungsgemäßen Methode.

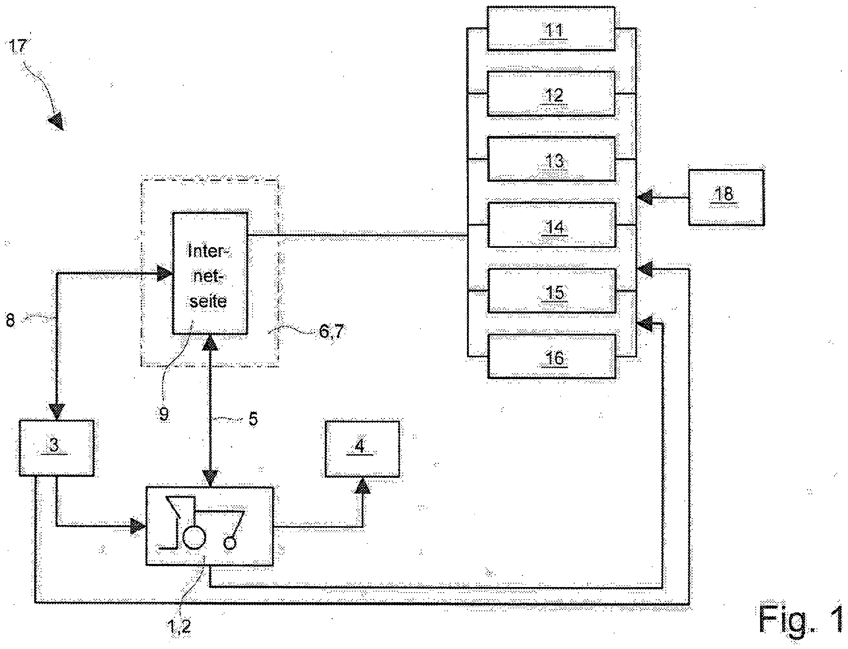

Figur 1 zeigt zunächst die erfindungsgemäße Methode anhand eines Flussdiagramms. Das von dem Hersteller 3 gefertigte Objekt 1, die landwirtschaftliche Arbeitsmaschine 2, wird nach Fertigstellung entweder unmittelbar von diesem oder über Vertriebsorganisationen an einen Abnehmer 4 übergeben. Der Abnehmer 4 kann dabei entweder unmittelbar der Endkunde, ein Landwirt oder ein Lohnunternehmer oder ein Zwischenhändler sein. Mit der Übergabe der landwirtschaftlichen Arbeitsmaschine 2 ist diese von dem Hersteller 3 selbst oder von beauftragten Dritten so eingerichtet worden, dass sie über ein noch näher zu beschreibendes Datenübertragungssystem 5 mit einem übergeordneten Datenkonfigurator 6 Informationen austauschen kann. Im dargestellten Ausführungsbeispiel wird der übergeordnete Datenkonfigurator 6 von einem weltweit zugänglichen Internet 7 gebildet. Mit der Übergabe des Objektes 1 hat der Hersteller 3 zugleich in dem übergeordneten Datenkonfigurator 6 über ein Kommunikationssystem 8 eine so genannte internetseite 9 angelegt, auf die das Objekt 1 mittels des Datenübertragungssystems 5 zugreifen kann. Auf der Internetseite 9 sind in erfindungsgemäßer Weise auf das Objekt 1, im vorliegenden Fall die landwirtschaftliche Arbeitsmaschine 2, bezogene individualisierte, noch näher zu beschreibende Datensätze 10 hinterlegt.

Im dargestellten Ausführungsbeispiel umfassen die hinterlegten Datensätze zunächst Herstellerinformationen 11, wie etwa, Produktdokumentationen, Bedienungsanweisungen und Reparaturanweisungen. Diese Informationen ermöglichen es schließlich dem Betreiber der landwirtschaftlichen Arbeitsmaschine 2 von der individualisierten Internetseite 9 maschinenspezifische Daten abzurufen, die unabhängig von der Einbindung des Objektes 1 in beliebige Prozessketten sind, da sie ausschließlich auf das Objekt 1 als solches bezogen sind.

Weiter umfasst der individualisierte Datensatz 10 Maschineninformationen 12, die neben prozessabhängigen auch prozessunabhängige Informationen umfassen können. Zunächst kann hier ein so genanntes Maschinenprofil hinterlegt sein, welches Maschinenspezifikationen, Leistungsparameter, technische Daten, Softwareversionen und installierte Systeme umfasst. Weiter können die Maschineninformationen Informationen darüber umfassen, welche Anwendungen und Prozesse von der landwirtschaftlichen Arbeitsmaschine 2 unterstützt werden. Hier sind vor allem Informationen darüber zu erhalten, ob und wie Qualitätsmanagementsysteme, automatische Prozessdatenerfassungen und Abfuhrlogistiken unterstützt werden. Weiter ist es denkbar, dass die Maschineninformationen 12 Informationen darüber umfassen, ob die konkrete landwirtschaftliche Arbeitsmaschine 2 Wendeautomatiken, Teleprozessoptimierungen und Lenkautomationen unterstützt und gegebenenfalls wie dies zu erfolgen hat.

Ein weiterer Bestandteil des Datensatzes 10 können so genannte Betreiberinformationen 13 sein, die individualisiert auf den die landwirtschaftliche Arbeitsmaschine 2 nutzenden Abnehmer 4 zugeschnitten sind und vor allem Merkmale des Fuhrparkmanagements, Angaben zur Fahrzeugflotte und Informationen zu verfügbaren betriebswirtschaftlichen Systeme, wie etwa Abrechnungssoftware und Mietmanagementsysteme umfassen.

Weiter umfasst der Datensatz landwirtschaftliche Informationen 14 im weitesten Sinne. Derartige Informationen sind maßgeblich an die Struktur der jeweiligen Prozesskette, in welche die landwirtschaftliche Arbeitsmaschine 2 eingebunden ist gekoppelt. Zu nennen wären hier beispielsweise Informationen bezüglich des Farmmanagements, der Qualitätssicherung und notwendige Daten für die Nutzung von Mapping- und Precision Farming Tools.

Zudem kann der Datensatz 10 so genannte Vernetzungsinformationen 15 umfassen, die im wesentlichen Auskunft darüber geben, über welche Kommunikationsausstattung die landwirtschaftliche Arbeitsmaschine 2 verfügt oder prozesskettenabhängig welche Kommunikationssysteme regionenspezifisch verfügbar sind.

Schließlich kann der Datensatz 10 auch so genannte Istandhaltungsinformationen 16 umfassen, die im wesentlichen Aufschluss darüber geben, wann und wie Instandhaltungsmaßnahmen durchzuführen sind, welche Diagnosesystem zur Verfügung stehen, ob Prognosesysteme verfügbar sind und wie diese gehandhabt werden.

Wegen der Vielzahl an Informationen, die die erfindungsgemäßen Datensätze 10 umfassen können, kann die Beschaffung dieser Informationen mitunter erhebliches Expertenwissen erfordern. Deshalb ist das erfindungsgemäße Datenkonfigurations- und bereitstellungssystem 17 so strukturiert, das die auf der individualisierten Internetseite 9 hinterlegten Datensätze 10 von dem Hersteller 3, der landwirtschaftlichen Arbeitsmaschine 2 und von externen Anbietern 18 oder einer Auswahl von diesen gemeinschaftlich generiert und in die Internetseite 9 integriert werden. In einem einfachen Anwendungsfall könnte die Informationsbereitstellung so strukturiert sein, dass der Hersteller 3 alle herstellerspezifischen Informationen bereitstellt, während die landwirtschaftliche Arbeitsmaschine 2 maschinenspezifische und prozesskettengebundene Informationen, wie optimierte Arbeitsparametereinstellungen, Qualitätsinformationen wie Kornverluste und Erntegutinformationen wie etwa Gutfeuchte bereitstellt. Externe Anbieter 18 können diejenigen Informationen bereitstellen, die ein irgendwie geartetes Spezialwissen erfordern und nicht oder nur mit erheblichem Aufwand von dem Hersteller 3 oder dem Maschinenbetreiber generierbar sind. Hier wären neben betriebswirtschaftlichen Abrechnungs- und Auftragsverwaltungssystemen, Informationen über Fuhrparks und im Zusammenhang mit einer speziellen Prozesskette beispielsweise regionenspezifische Informationen zu nennen.

Zudem kann das erfindungsgemäße Datenkonfigurations- und -bereitstellungssystem 17 so konfiguriert sein, dass die individualisierte Internetseite 9 zunächst nur eine Grundkonfiguration des erfindungsgemäßen Datensatzes 10 umfasst. Im einfachsten Fall wird diese Grundkonfiguration von dem Hersteller 3 erstellt. Über die Lebensdauer des Objektes kann nun der über die individualisierte Internetseite 9 abrufbare Datensatz 10 vervollständigt, angepasst oder feiner untergliedert werden, sodass sich zunehmend ein immer individueller auf das jeweilige Objekt 1 abgestimmter Datensatz 10 ergibt.

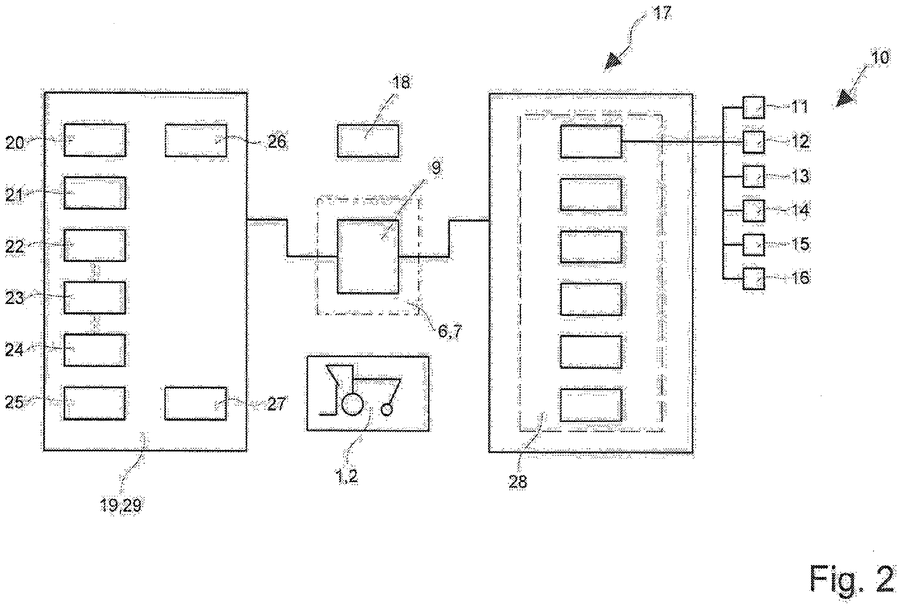

Ein besonders effizientes Datenkonfigurations- und -bereitstellungssystem 17 ist in Figur 2 schematisch dargestellt. Die individualisierte Internetseite 9 ist zunächst mit einer Datenmodulspeicher- und -editiereinheit 19 verbunden, in der noch näher zu beschreibende Datenmodule 20-27 hinterlegt sind. Im dargestellten Ausführungsbeispiel umfassen die Datenmodule beispielhaft ein Auftragsmodul 20, ein Flottenplanungsmodul 21, ein Getreideerntemodul 22, ein Stroh-Pressen-Modul 23, ein Modul Erntegut bergen 24, ein Wartungsmodul 25, ein Abrechnungsmodul 26 sowie ein Reparaturmodul 27. Über den Datenkonfigurator 6, im dargestellten Ausführungsbeispiel das Internet 7 kann nun der Betreiber der landwirtschaftlichen Arbeitsmaschine 2 und/oder ein externe Anbieter 18 ein auf das jeweilige Objekt 1 zugeschnittenes Programmmodul 28 generiert werden, das unmittelbar zur Einbindung der landwirtschaftlichen Arbeitsmaschine 2 in eine Prozesskette, hier die Getreideernte, bestimmt ist. Jeder dieser Programmmodule 20-27 kann nun wieder wie der Datensatz 10 nach Figur 1 strukturiert sein, wobei die Informationsblöcke 11-16 entweder jedem Programmmodul 20-27 oder einheitlich dem neu generierten übergeordneten Programmmodul 28 zugeordnet werden. Indem die Programmmodule 20-27 in einer übergeordneten Datenspeicher- und -editiereinheit 19 hinterlegt sind, kann die landwirtschaftlicher Erntemaschine 2 entweder im Bedarfsfall, wie etwa bei Beschädigungen kontextrelevant auf das spezielle Programmmodul Reparatur 27 zugreifen oder sich in bestehende durch einen übergeordneten Programmmodul 28 definierte Prozessketten integrieren. Auf diese Weise wird es möglich, dass die landwirtschaftliche Arbeitsmaschine 2 die Fähigkeit erhält sich selbsttätig in ein bestehendes Arbeitsumfeld einzuordnen, was im konsequentesten Fall zu einer Selbstorganisation der landwirtschaftlichen Arbeitsmaschine 2 führt. Da die Datenspeicher- und -editiereinheit 19 über ein Internet 7 angesprochen wird, kann diese von einem oder mehreren irgendwo in der Welt positionierten Servern 29 gebildet werden. Denkbar wäre aber auch, dass die Datenspeicher- und -editiereinheit 19 unmittelbar auf der landwirtschaftlichen Arbeitsmaschine 2 selbst angeordnet ist. Damit ferner der Austausch der Programmmodule 20-28 in dem Internet 7 problemlos erfolgen kann, sind die die Datensätze 10 umfassenden Programmmodule 20-28 in einer an sich bekannten universellen Modulationssprache erstellt.

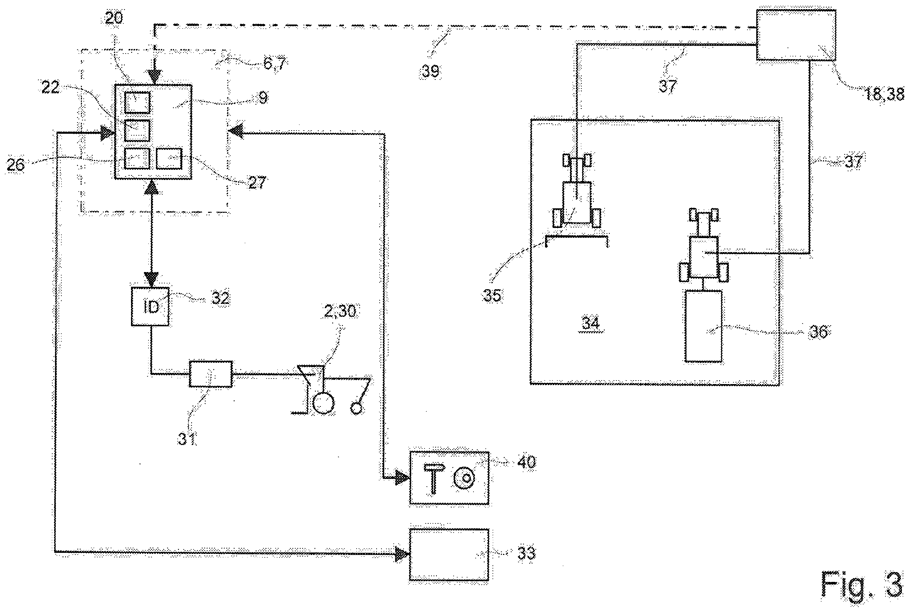

Figur 3 verdeutlicht anhand eines konkreten Einsatzfalles einer landwirtschaftlichen Arbeitsmaschine 2 die Wirkungsweise und den Ablauf der erfindungsgemäßen Methode. Die landwirtschaftliche Arbeitsmaschine 2 ist als Mähdrescher 30 ausgeführt. Der Mähdrescher 30 verfügt über eine Steuer- und Auswerteinheit 31 der herstellerseitig eine ID-Adresse 32 zugeordnet wurde mittels derer der Mähdrescher 30 auf die individualisierte Internetseite 9 des als Internet 7 ausgeführten übergeordneten Datenkonfigurators 6 zugreifen kann. Über eine Fuhrparkzentrale 33 wurde ein Auftragsmodul 20 für den Mähdrescher 30 erstellt, welches dieser über die ihm individualisiert zugeordnete Internetseite 9 in der zuvor beschriebenen Weise abrufen kann. Der Auftrag betrifft das Abernten eines Nutzterritoriums 34, auf welchen die Prozesskette Getreideernte bereits begonnen hat. Im dargestellten Ausführungsbeispiel sind hierfür symbolisch ein Mähdrescher 35 und ein so genanntes Abtankfahrzeug 36 dargestellt. Der Mähdrescher 35 und das Transportfahrzeug 36 verfügen über an sich bekannte und deshalb nicht näher beschriebene Datenaustauschsysteme 37 mittels derer sie untereinander und mit einer zentralen Recheneinheit 38 Daten austauschen können. Insbesondere werden auf diesem Wege Positionsdaten. Erntegutmengen und Erntegutqualitäten ausgetauscht. In der zentralen Recheneinheit 38 ergibt sich damit ein exaktes Bild von dem momentanen Abarbeitungsgrad der Prozesskelte Getreideernte, insbesondere welche Bereiche des zu bearbeitenden Nutzterritoriums 34 noch abgeerntet werden müssen. Diese Informationen werden von der als externer Anbieter 18 fungierenden Recheneinheit 38 über an sich bekannte Datenübertragungssysteme 39 in das Internet 7, den übergeordneten Datenkonfigurator 6, übertragen. Diese Informationen kann der Mähdrescher 30 als Programmmodul Getreideernte 22 in seine individualisierte Internetseite 9 einbinden. Denkbar wäre auch, dass diese Einbindung unmittelbar von der externen Recheneinheit 38 vorgenommen wird. Weiter kann die Fuhrparkzentrale 33 dem Mähdrescher 30 zugleich einen Programmmodul Abrechnung 26 zuordnen, sodass die von dem Mähdrescher 30 erbrachten Leistungen schließlich unmittelbar abgerechnet werden können. Die beispielhaft ausgewählten Programmmodule 20. 22, 26 bilden dabei den die erfindungsgemäßen Datensätze 10 umfassenden übergeordneten Programmmodul 28.

In den gewählten Programmmodulen 20, 22, 26 sind nun alle diejenigen Informationen enthalten, die den Mähdrescher 30 zunächst zu dem zu bearbeitenden Territorium 34 führen, die Einordnung des Mähdreschers 30 in die bereits gestartete Prozesskette bewirken, eine Optimierung der Maschinenparameter unter dem Gesichtspunkt der Erzeugung eines qualitativ hochwertigen Ernteprodukte und einer effizienten Maschinenauslastung zulassen und schließlich die einfache Abwinklung der Rechnungsstellung an den Besitzer des bearbeiteten Territoriums 34 gewährleistet. Tritt nun während dieses Einsatzes an dem Mähdrescher 30 ein Schaden auf, ist der Mähdrescher 30 über seine individualisierte Internetseite 9 und die ihm zugeordnete ID-Adresse einen Programmmodul Reparatur 27 zu aktivieren, der ihm entweder eine Online-Hilfe zur Durchführung der Reparatur bereitstellt. Denkbar wäre aber auch, dass die Aktivierung des Programmmoduls Reparatur 27 unmittelbar über geeignete Datenaustauschsysteme 39 eine Reparaturwerkstatt 40 in den Reparaturprozess einbindet, im einfachsten Fall mit der Durchführung der Reparatur beauftragt. Es liegt zudem im Rahmen der Erfindung, dass die Reparaturwerkstatt 40 selbst den Programmmodule Reparatur 27 bereitstellt. Ein analoges Vorgehen kann dann vorgesehen sein, wenn an dem Mähdrescher 30 Wartungsarbeiten durchgeführt werden sollen und der Mähdrescher 30 über seine individualisierte Internetseite 9 einen Programmmodul Wartung 25 aktiviert, wobei auch in diesem Fall der aktivierte Programmmodul 25 alle für den Betreiber des Mähdreschers 30 erforderlichen Informationen umfasst.

## Patentansprüche

1. Methode zur Datenkonfiguration und -bereitstellung für landwirtschaftliche Arbeitsmaschinen (2),
wobei der landwirtschaftlichen Arbeitsmaschine (2) in einem übergeordneten Datenkonfigurator (6, 7) ein auf die jeweilige landwirtschaftliche Arbeitsmaschine (2) bezogener individualisierter Datensatz (10) zugeordnet wird und die landwirtschaftliche Arbeitsmaschine (2) den auf sie bezogenen individualisierten Datensatz (10) abruft, **dadurch gekennzeichnet, dass** der übergeordnete Datenkonfigurator (6) von einem Internet (7) gebildet wird und der Datensatz (10) als Internetseite (9) in dem Internet (7) ausgebildet ist und die Internetseite (9) der landwirtschaftlichen Arbeitsmaschine (2) zum Zeitpunkt der Auslieferung von einem Hersteller (3) an einen Abnehmer (4) der landwirtschaftlichen Arbeitsmaschine (2) individualisiert zugeordnet wird und wobei der Datensatz (10) in dem übergeordneten Datenkonfigurator (6, 7) von externen Anbieter (18) generiert wird und der oder die Datensätze (10) von der landwirtschaftlichen Arbeitsmaschine (2) und/oder dem externen Anbieter (18) so editierbar sind, dass die Datensätze (10) die landwirtschaftliche Arbeitsmaschine (2) in die Lage versetzen sich in ein Arbeitsumfeld einzuordnen und/oder eine Selbstorganisation der landwirtschaftlichen Arbeitsmaschine (2) ermöglichen und die Datensätze (10) Prozessketten abbilden und die jeweilige landwirtschaftliche Arbeitsmaschine (2) Bestandteil einer oder mehrerer Prozessketten ist.

2. Methode zur Datenkonfiguration und -bereitstellung nach einem der vorhergehenden Ansprüche,
**dadurch gekennzeichnet,**
**dass** die landwirtschaftliche Arbeitsmaschine (2) über Mittel zur selbstständigen Konfiguration der Datensätze (10) verfügt.

3. Methode zur Datenkonfiguration und -bereitstellung nach Anspruch 2,
**dadurch gekennzeichnet,**
**dass** die Mittel als computerbasiertes Datenverarbeitungssystem ausgebildet sind.

4. Methode zur Datenkonfiguration und -bereitstellung nach Anspruch 3,
**dadurch gekennzeichnet,**
**dass** das computerbasierte Datenverarbeitungssystem zumindest eine Steuer- und Auswerteinheit (31) und eine objektbezogene ID-Adresse (32) umfasst.

5. Methode zur Datenkonfiguration und -bereitstellung nach Anspruch 1,
**dadurch gekennzeichnet,**
**dass** die Einordnung in ein Arbeitsumfeld und/oder die Selbstorganisation durch Verknüpfung von Programmmodulen (20-28) zu den Datensätzen (10) bewirkt wird.

6. Methode zur Datenkonfiguration und -bereitstellung nach Anspruch 5,
**dadurch gekennzeichnet,**
**dass** die Programmmodule (20,28) zumindest in der der landwirtschaftlichen Arbeitsmaschine (2) zugeordneten Steuer- und Auswerteinheit (31), dem Datenkonfigurator (6, 7) oder einer von dem Datenkonfigurator (6, 7) ansprechbaren Datenspeicher- und Editiereinheit (19) hinterlegt sind und/oder in diesem generiert werden.

7. Methode zur Datenkonfiguration und -bereitstellung nach Anspruch 6,
**dadurch gekennzeichnet,**
**dass** die Programmmodule (20-28) in einer Kombination aus Steuer- und Auswerteinheit (31), dem Datenkonfigurator (6, 7) oder einer von dem Datenkonfigurator (6, 7) ansprechbaren Datenspeicher- und Editiereinheit (19) hinterlegt sind und/oder in diesen generiert werden.

8. Methode zur Datenkonfiguration und -bereitstellung nach einem der vorhergehenden Ansprüche,
**dadurch gekennzeichnet,**
**dass** die landwirtschaftliche Arbeitsmaschine (2) ausgebildet ist und die Datensätze (10) Herstellerinformationen (11), Maschineninformationen (12), Betreiberinformationen (13), landwirtschaftliche Informationen (14), Vernetzungsinformationen (15) und Instandhaltungsinformationen (16) oder eine Kombination aus diesen umfassen.

9. Methode zur Datenkonfiguration und -bereitstellung nach einem der vorhergehenden Ansprüche,
**dadurch gekennzeichnet,**
**dass** die Modulation der Programmmodule (20-28) in einer universellen Modulationssprache abgebildet wird.

10. Methode zur Datenkonfiguration und -bereitstellung nach einem der vorhergehenden Ansprüche,
**dadurch gekennzeichnet,**
**dass** der jeweilige Datensatz (10) durch stufenweise Integration von Programmmodulen (20-27) gebildet wird.

11. Vorrichtung zur Umsetzung der Methode nach Anspruch 1,
**dadurch gekennzeichnet,**
**dass** die landwirtschaftliche Arbeitsmaschine (2) zumindest eine Steuer- und Auswerteinheit (31) umfasst und der landwirtschaftlichen Arbeitsmaschine (2) mittels der Steuer- und Auswerteinheit (31) eine objektbezogene ID-Adresse (32) zuordenbar ist und die Steuer- und Auswerteinheit (31) einen Datenaustausch mit einem übergeordneten Datenkonfigurator (6,7) ermöglicht und der Datenkonfigurator (6, 7) der landwirtschaftlichen Arbeitsmaschine (2) einen individualisierten und editierbaren Datensatz (10) über die Steuer- und Auswerteinheit (31) zuordnet.

12. Vorrichtung zur Datenkonfiguration und Bereitstellung nach Anspruch 11,
**dadurch gekennzeichnet,**
**dass**
die Freischaltung der ID-Adresse (32) von dem Hersteller (3) der landwirtschaftlichen Arbeitsmaschine (2) bei Übergabe des Objektes (1) an einen Abnehmer (4) vorgenommen wird.

## Claims

1. A method for data configuration and retrieval for agricultural working machines (2), wherein an individualised data set (10) related to the respective agricultural working machine (2) is associated with the agricultural working machine (2) in a higher-order data configurator (6, 7) and the agricultural working machine (2) retrieves the individualised data set (2) related thereto, **characterised in that** the higher-order data configurator (6) is formed by an Internet (7) and the data set (10) is in the form of a website (9) in the Internet (7) and the website (9) is individualisedly associated with the agricultural working machine (2) at the time of the delivery by a manufacturer (3) to a customer (4) of the agricultural working machine (2) and wherein the data set (10) is generated in the higher-order data configurator (6, 7) by external suppliers (18) and the data set or sets (10) can be edited by the agricultural working machine (2) and/or the external supplier (18) in such a way that the data sets (10) enable the agricultural working machine (2) to incorporate itself into a working environment and/or to permit self-organisation of the agricultural working machine (2) and the data sets (10) depict process chains and the respective agricultural working machine (2) is a component part of one or more process chains.

2. A method for data configuration and retrieval according to claim 1 **characterised in that** the agricultural working machine (2) has means for automatic configuration of the data sets (10).

3. A method for data configuration and retrieval according to claim 2 **characterised in that** the means are in the form of a computer-based data processing system.

4. A method for data configuration and retrieval according to claim 3 **characterised in that** the computer-based data processing system includes at least one control and evaluation unit (31) and an object-related ID address (32).

5. A method for data configuration and retrieval according to claim 1 **characterised in that** the incorporation in a working environment and/or self-organisation is implemented by linking program modules (20-28) with the data sets (10).

6. A method for data configuration and retrieval according to claim 5 **characterised in that** the program modules (20, 28) are stored in the control and evaluation unit (31) associated with the agricultural working machine, the data configurator (6, 7) or a data storage and editing unit (19) which can be addressed by the data configurator (6, 7), and/or are generated therein.

7. A method for data configuration and retrieval according to claim 6 **characterised in that** the program modules (20-28) are stored in a combination of control and evaluation unit (31), the data configurator (6, 7) or a data storage and editing unit (19) which can be addressed by the data configurator (6, 7), and/or are generated therein.

8. A method for data configuration and retrieval according to one of the preceding claims **characterised in that** the agricultural working machine (2) is designed and the data sets (10) include manufacturer information (11), machine information (12), operator information (13), agricultural information (14), networking information (15) and maintenance information (16) or a combination of same.

9. A method for data configuration and retrieval according to one of the preceding claims **characterised in that** modulation of the program modules (20-28) is depicted in a universal modulation language.

10. A method for data configuration and retrieval according to one of the preceding claims **characterised in that** the respective data set (10) is formed by stepwise integration of program modules (20-27).

11. Apparatus for carrying out the method according to claim 1 1**characterised in that** the agricultural working machine (2) includes at least one control and evaluation unit (31) and an object-related ID address (32) can be associated with the agricultural working machine (2) by means of the control and evaluation unit (31) and the control and evaluation unit (31) permits data exchange with a higher-order data configurator (6, 7) and the data configurator (6, 7) associates an individualised and editable data set (10) with the agricultural working machine (2) by way of the control and evaluation unit (31).

12. Apparatus for data configuration and retrieval according to claim 11 **characterised in that** release of the ID address (32) is effected by the manufacturer (3) of the agricultural working machine (2) when the object (1) is transferred to a customer (4).

## Revendications

1. Procédé de configuration et de mise à disposition de données pour des engins de travail agricoles (2), un ensemble de données individualisé (10) concernant l'engin de travail agricole (2) en question étant affecté à l'engin de travail agricole (2) dans un configurateur central de données (6, 7), et l'engin de travail agricole (2) interrogeant l'ensemble de données individualisé (10) le concernant, le configurateur central de données (6) étant formé par un Internet (7), et l'ensemble de données (10) étant conformé en page Internet (9) dans l'Internet (7), et la page Internet (9) de l'engin de travail agricole (2) étant affectée de manière individualisée à l'engin de travail agricole (2) au moment de la livraison par un fabricant (3) à un acquéreur (4), et l'ensemble de données (10) étant généré dans le configurateur central de données (6, 7) par un pourvoyeur extérieur (18), et le ou les ensembles de données (10) étant modifiables par l'engin de travail agricole (2) et/ou par le pourvoyeur extérieur (18), de façon que les ensembles de données (10) permettent à l'engin de travail agricole (2) de s'intégrer à un environnement de travail et/ou permettent une auto-organisation de l'engin de travail agricole (2), les ensembles de données (10) représentant des chaînes de processus, et l'engin de travail agricole (2) en question faisant partie d'une ou de plusieurs chaînes de processus.

2. Procédé de configuration et de mise à disposition de données selon une des revendications précédentes, **caractérisé en ce que** l'engin de travail agricole (2) dispose de moyens de configuration autonome des ensembles de données (10) .

3. Procédé de configuration et de mise à disposition de données selon la revendication 2, **caractérisé en ce que** les moyens sont conformés en système informatique assisté par ordinateur.

4. Procédé de configuration et de mise à disposition de données selon la revendication 3, **caractérisé en ce que** le système informatique assisté par ordinateur comprend au moins une unité de commande et d'analyse (31) et une adresse d'identification (32) liée à l'objet.

5. Procédé de configuration et de mise à disposition de données selon la revendication 1, **caractérisé en ce que** l'intégration dans un environnement de travail et/ou l'auto-organisation sont réalisées en combinant des modules de programmes (20-28) aux ensembles de données (10).

6. Procédé de configuration et de mise à disposition de données selon la revendication 5, **caractérisé en ce que** les modules de programmes (20-28) sont mémorisés au moins dans l'unité de commande et d'analyse (31) affectée à l'engin de travail agricole (2), dans le configurateur de données (6, 7) ou dans une unité de stockage et de modification de données (19) adressable par le configurateur de données (6, 7) et/ou sont générés dans ceux-ci.

7. Procédé de configuration et de mise à disposition de données selon la revendication 6, **caractérisé en ce que** les modules de programmes (20-28) sont mémorisés dans une combinaison de l'unité de commande et d'analyse (31), du configurateur de données (6, 7) ou d'une unité de stockage et de modification de données (19) adressable par le configurateur de données (6, 7) et/ou sont générés dans ceux-ci.

8. Procédé de configuration et de mise à disposition de données selon une des revendications précédentes, **caractérisé en ce que** l'engin de travail agricole (2) est conformé, et les ensembles de données (10) comprennent des informations fabricant (11), des informations machine (12), des informations exploitant (13), des informations agricoles (14), des informations de mise en réseau (15) et des informations d'entretien (16) ou une combinaison de celles-ci.

9. Procédé de configuration et de mise à disposition de données selon une des revendications précédentes, **caractérisé en ce que** la modulation des modules de programmes (20-28) est représentée dans un langage de modulation universel.

10. Procédé de configuration et de mise à disposition de données selon une des revendications précédentes, **caractérisé en ce que** chaque ensemble de données (10) est formé par intégration graduelle de modules de programmes (20-27).

11. Dispositif pour la mise en œuvre du procédé selon la revendication 1, **caractérisé en ce que** l'engin de travail agricole (2) comprend au moins une unité de commande et d'analyse (31), et une adresse d'identification (32) liée à l'objet peut être affectée à l'engin de travail agricole (2) au moyen de l'unité de commande et d'analyse (31), et l'unité de commande et d'analyse (31) permet un échange de données avec un configurateur central de données (6, 7), et le configurateur de données (6, 7) affecte à l'engin de travail agricole (2) un ensemble de données individualisé et modifiable (10) par l'intermédiaire de l'unité de commande et d'analyse (31).

12. Dispositif pour la configuration et la mise à disposition de données selon la revendication 11, **caractérisé en ce que** l'activation de l'adresse d'identification (32) est effectuée par le fabricant (3) de l'engin de travail agricole (2) lors de la remise de l'objet (1) à un acquéreur (4) .
